# EUROPEAN PATENT SPECIFICATION

(11) **EP 1 025 140 B1**
(45) Date of publication and mention of the grant of the patent: **06.02.2002**
(21) Application number: 98961131.4
(22) Date of filing: 21.10.1998
(51) Int. Cl.: C08G 18/48

(54) **POLYOL FORMULATION**
POLYOLFORMULIERUNG
COMPOSITION DE POLYOL

(30) Priority: 22.10.1997 EP 97308379
(43) Date of publication of application: 09.08.2000
(73) Proprietor: SHELL INTERNATIONALE RESEARCH MAATSCHAPPIJ B.V., 2596 HR Den Haag (NL)
(72) Inventor: ZARKA, Philippe, Etienne, B-1348 Ottignies (BE)
(74) Representative: Swinnen, Anne-Marie
(86) International application number: EP9807015
(87) International publication number: WO9920672

(56) References cited:
- WO-A-94/24184
- WO-A-95/09886
- US-A- 4 568 702

## Description

This invention relates to a polyol formulation and particularly, although not exclusively, relates to a polyol formulation per se and a method of preparing a polyurethane foam using such a formulation.

Semi-flexible polyurethane foams having a virtually closed-cell structure are currently used for insulating semi-flexible pipes which may be used in heating systems or simply for the transport of hot liquids.

Several advantages are associated with the production and use of semi-flexible pipes. For example, a substantially continuous process can be used in the production of the pipes, thereby allowing high production rates and a reduction in the amounts of raw materials used, since almost no overpack is required to fill the pipes. Additionally, the flexibility of the pipes enables them to be rolled up on a coil which facilitates transport and installation. Furthermore, longer pieces of pipe can be installed on-site which reduces the number of joints required to interconnect pipes.

The foams used in pipes should, in addition to meeting flexibility requirements, have other appropriate mechanical properties and be able to withstand relatively high temperatures. For operating temperatures up to 95 °C, it is possible to use polyethylene inner pipes having foam systems with a low heat resistance. However when operating temperatures above 120 °C are used, metal inner pipes of, for example, copper, corrugated steel or chrome-nickel are used, which require adapted foam systems. It is desirable for foam manufacturers to make one foam which can meet both heat resistance requirements described.

It is known to use mixtures of polyols having different properties for making semi-flexible polyurethane foams. One known mixture (described in comparative Example C1 hereinafter) can satisfy the heat resistance requirements; however, the polyols used are immiscible and, disadvantageously therefore, it is necessary to blend them before use. Other miscible polyol systems are also commercially available. However, known systems produce polyurethane foams which either do not satisfactorily meet the heat resistance requirements described or produce foams having a low degree of flexibility.

US 4 568 702 describes a polyol mixture consisting of 25-75 wt% of a flexible polyether polyol and 75-25 wt% of a rigid polyether polyol. It does not disclose a single-phase miscible polyol mixture.

It is an object of the present invention to address the above-described problems.

According to a first aspect of the invention, there is provided a single-phase polyol mixture consisting essentially of 20 to 65 wt% of polyol of a first type (hereinafter "said first polyol") having a number average molecular weight of greater than 800, a hydroxyl value of less than 200 mg KOH/g, and an ethylene oxide content of less than 75 wt% and, forming a miscible mixture therewith, 35 to 80 wt% of polyol of a second type (hereinafter "said second polyol") having a number average molecular weight of less than 1000, a hydroxyl value of greater than 300 mg KOH/g and an amine content (expressed in terms of the percentage of N) of at least 0.2 wt%.

Said first polyol may have a molecular weight of greater than 1500, suitably greater than 2000, preferably greater than 2500, more preferably greater than 2700, especially greater than 2900. Suitably, said first polyol has a molecular weight of less than 20,000, preferably less than 15,000, more preferably less than 10,000, especially less than 8,000.

Suitably, said first polyol has a hydroxyl value of less than 150, preferably less than 100, more preferably less than 80, especially less than 60 mg KOH/g. Suitably, said first polyol has a hydroxyl value of at least 10, preferably at least 15, more preferably at least 20, especially at least 25 mg KOH/g.

The functionality of a polyol is defined as the average number of hydroxyl groups per molecule of polyol. Suitably, said first polyol has a functionality of at least 2.0, preferably at least 2.2, more preferably at least 2.4, especially at least 2.5. Suitably, said first polyol has a functionality of 6 or less, preferably 5 or less, more preferably 4 or less, especially 3.5 or less.

The ethylene oxide content by weight in said first polyol may be at least 5%, preferably at least 8%, more preferably at least 10%, especially at least 12%. Said ethylene oxide content in said first polyol may be less than 60%, suitably less than 50%, preferably less than 40%, more preferably less than 30%, especially 20% or less. The remainder of the alkylene oxide content of said first polyol may be provided by propylene oxide. Thus, preferably, said first polyol is a poly(oxyalkylene) polyether polyol, more in particular an ethylene oxide and/or propylene oxide adduct.

Ethylene oxide can be incorporated in any fashion along the polymer chain of said first polyol, for example as internal blocks, terminal blocks or randomly distributed.

Said first polyol may comprise a polymer polyol which is a dispersion of a solid polymer in a liquid base polyol. EP 0 778 301 A (Shell) describes polymer polyols. The base polyol may have any feature of said first polyol described in any statement herein. Where a reference is made herein to the wt% of a first polyol in the formulation, the wt% refers to the amount of base polyol when a polymer polyol is used.

The polymer dispersed in the base polyol, may in principle be any such polymer known to be applicable for this purpose. Thus, suitable polymers include the polymers based on ethylenically unsaturated monomers and particularly polymers of vinyl aromatic hydrocarbons, like styrene, alpha-methyl styrene, methyl styrene and various other alkyl-substituted styrenes. Of these, the use of styrene is preferred. The vinyl aromatic monomer may be used alone or in combination with other ethylenically unsaturated monomers, such as acrylonitrile, methacrylonitrile, vinylidene chloride, various acrylates and conjugated dienes like 1,3-butadiene and isoprene. Preferred polymers, however, are polystyrene and styrene-acrylonitrile (SAN) copolymers. Another suitable class of polymers are the polyurea and polyurethane polymers. Particularly the condensation products of primary amines or polyhydric alcohol amines and aromatic diisocyanates are very useful in this respect. A very much preferred polymer is the condensation product of triethanolamine and toluene diisocyanate (TDI). The dispersed polymer is suitably present in an amount of from 5 to 50% by weight based on total weight of polymer polyol. In case the polymer is polystyrene or SAN polymer, preferred solids amounts are in the range of from 5 to 35% by weight, whilst in case of polyurea polyurethane polymers the preferred amount of polymer is from 5 and 20% by weight.

Examples of commercially available polymer polyols include the polyurethane polyols CARADOL SP50-01 and DESMOPHEN 7652, and also the polystyrene polyols CARADOL MD25-01 and CARADOL MD30-01 (CARADOL and DESMOPHEN are trade names).

Preferably, said second polyol has a molecular weight of greater than 100, preferably greater than 200. Said molecular weight is suitably less than 900, is preferably less than 750, more preferably 500 or less and most preferably less than 450.

Suitably, said second polyol has a hydroxyl value of at least 300, preferably at least 400, more preferably at least 450 mg KOH/g. Said hydroxyl value may be less than 750, preferably less than 700, more preferably 650 mg KOH/g or less.

The amine content of said second polyol (expressed in terms of the percentage of nitrogen in the polyol) may be at least 0.5 wt%, is suitably at least 0.7 wt%, is preferably at least 1 wt%, is more preferably at least 2 wt%, and is especially at least 3 wt%. The amine content may be less than 15 wt%, preferably less than 12 wt%, more preferably 8 wt% or less.

The aromaticity (or aromatic content) of said second polyol may be in the range 0 to 30%, preferably in the range 5 to 25%, more preferably in the range 10 to 20%, especially about 16%.

Aromaticity refers to the weight percentage of aromatic carbon atoms, i.e. carbon atoms contained in an aromatic ring structure, present in a compound or formulation relative to the total weight of that compound or formulation.

The alkylene oxide in said second polyol may be PO alone or PO-EO.

Said first and/or said second polyols may comprise a blend of polyols or a dilution of polyols, in which case the characterising features of the first and second polyols described herein (e.g. the wt%, hydroxyl values, molecular weights, functionalities and ethylene oxide content) refer to average values for the blend or dilution, rather than to values for, for example, individual polymers in a blend.

Preferably, said polyol mixture includes at least 30 wt%, more preferably at least 40 wt% of said first polyol. Preferably, said mixture includes 60 wt% or less of said first polyol. Preferably, said mixture includes 40 to 60 wt% of said first polyol. Preferably, said mixture includes at least 40 wt% of said second polyol. Preferably, said mixture includes 70 wt% or less of said second polyol. Preferably, said mixture includes 60 to 40 wt% of said second polyol.

The polyol mixture may be combined with additional components and auxiliaries useful in the production of rigid and flexible polyurethane foams into a polyol formulation. One polyol formulation is defined in claim 6. For instance, such polyol formulation could comprise a foaming catalyst and/or a cross-linking agent for example glycerol and/or a chain extender for example 1,4-butanediol. Auxiliaries like fillers, flame retardants, foam stabilisers, blowing agents and colourants may be present as well. Conveniently, the polyol formulation comprises ("php" refers to the amount in parts by weight per 100 parts by weight of the first and second polyols):
(a) 0 to 8 php of one or more polyurethane catalysts; and
(b) 0 to 10.0 php, suitably 0 to 5.0 php of a cross-linking agent.

Polyurethane catalysts are known in the art and include many different compounds. An extensive list of polyurethane catalysts is, for instance, given in U.S. Patent Specification No 5,011,908. A preferred catalyst is an amine, especially a tertiary amine, catalyst. Preferred amine catalysts include an amine group substituted by at least two optionally-substituted, preferably unsubstituted, lower alkyl groups which may be the same or different, but are preferably the same. A lower alkyl group may have up to 8, preferably up to 6, more preferably up to 4, carbon atoms, with methyl and ethyl groups being especially preferred. A tertiary amine catalyst may be selected from bis(2,2'-dimethylamino)-ethyl ether, trimethylamine, triethyiamine, triethylenediamine, dimethylethanolamine, N,N',N'-dimethylaminopropylhexahydrotriazine and N,N-dimethylcyclohexylamine. Examples of commercially available tertiary amine catalysts are those sold under the trade names NIAX, TEGOAMIN , JEFFCAT (from Huntsman Chemicals) and DABCO (all trade names).

Said foaming catalyst is typically used in an amount in the range of from 0 to 5 php. Preferred amounts of catalyst are in the range from 0.5 to 2.5 php.

The use of cross-linking agents in the production of polyurethane foams is well known. Polyfunctional alkanol amines are known to be useful for this purpose. Preferred amines which may be included in the polyol formulation to aid or maintain the miscibility of the first and second polyols include diethanolamine, often abbreviated as DEOA, and triethanolamine, often abbreviated as TEOA. If used at all, the cross-linking agent is applied in amounts up to 10 php, for example from 0.5 to 5 php.

Blowing agents may also be included in the polyol formulation. Suitable blowing agents include water, acetone, (liquid) carbon dioxide, halogenated hydrocarbons, aliphatic alkanes and alicyclic alkanes. Due to the ozone depleting effect of the fully chlorinated, fluorinated alkanes (CFC's) the use of this type of blowing agent is generally not preferred, although it is possible to use them within the scope of the present invention. The halogenated alkanes, wherein at least one hydrogen atom has not been substituted by a halogen atom (the so called HCFC's and HFC's), have a significantly lower ozone depleting effect and therefore are the preferred halogenated hydrocarbons to be used in physically blown foams. A very suitable HCFC type blowing agent is 1-chloro-1,1-difluoroethane. The use of water as a (chemical) blowing agent is also well known. Water reacts with isocyanate groups according to the well known NCO/H₂O reaction, thereby releasing carbon dioxide which causes the blowing to occur. The aliphatic and alicyclic alkanes, finally, were developed as alternative blowing agents for the CFC's. Examples of such alkanes are butanes and pentanes (aliphatic) and cyclopentane (alicyclic). It will be understood that the above blowing agents may be used singly or in mixtures of two or more. Of the blowing agents mentioned, water giving carbon dioxide has been found to be particularly suitable as blowing agent for the purpose of the present invention. The amounts wherein the blowing agents are to be used are those conventionally applied, i.e. in the range of from 0.1 to 5 php in case of water and in the range of from about 0.1 to 20 php in case of halogenated hydrocarbons, aliphatic alkanes, alicyclic alkanes and liquid carbon dioxide.

In addition, other well known auxiliaries, such as flame retardants, foam stabilisers (surfactants) and fillers may be included in the formulation. Organosilicone surfactants are most conventionally applied as foam stabilisers in polyurethane production. A large variety of such organosilicone surfactants is commercially available. Usually, such foam stabiliser is used in an amount of up to 5% by weight based on the reaction mixture of polyol reactant and polyisocyanate reactant.

Said polyol formulation is preferable for producing a polyurethane foam having a softening temperature of 120 °C or more and one which is semi-flexible. Whether a polyol formulation is suitable, can be assessed by the following test:

The test comprises reacting, at 21 °C, 100 parts by weight of the polyol formulation in the presence of 1.8 parts by weight of water, an amine catalyst and 1.0 parts by weight of silicone surfactant (e.g. TEGOSTAB B8404), with polymeric MDI having the characteristics of CARADATE 30 described hereinafter at a isocyanate index of 110. The level of catalyst is selected such that a fibre time of 30 seconds (plus or minus 5 seconds) is obtained.

Said polyol formulation preferably is arranged to react with polymeric MDI in the conditions described in the test referred to above to produce a semi-flexible polyurethane foam having a softening temperature of 120 °C or above.

The invention extends to a method of preparing a single-phase polyol mixture according to said first aspect which comprises mixing together a said first polyol and a said second polyol as defined in claim 7.

According to a second aspect, there is provided a method of preparing a polyurethane foam which is semi-flexible and has a softening temperature of 120 °C or above, the method including reacting a polyisocyanate component with a polyol formulation as described hereinbefore.

The method is preferably carried out at ambient temperature, suitably in the range 20 to 25 °C.

Polyisocyanates that may be used are those conventionally applied in the production of flexible, semi flexible or rigid polyurethane foams. Useful polyisocyanates should contain at least two isocyanate groups and include both aliphatic (usually alkylene) and aromatic di-, tri-, tetra- and higher isocyanates known in the art to be suitably applied in the production of flexible polyurethane foams. Mixtures of two or more of such aliphatic and/or aromatic polyisocyanates may also be applied. Examples of suitable polyisocyanates, include 2,4-toluene diisocyanate (2,4-TDI), 2,6-TDI, mixtures of 2,4-TDI and 2,6-TDI, 1,5-naphthene diisocyanate, 2,4-methoxyphenyl diisocyanate, 4,4'-diphenylmethane diisocyanate (MDI), 4,4'- biphenylene diisocyanate, 3,3'-dimethoxy-4,4'-biphenylene diisocyanate, 3,3'-dimethyl-4,4'-biphenylene diisocyanate and 3,3'-dimethyl-4,4'-diphenylmethane diisocyanate, 4,4',4"-triphenylmethane triisocyanate, 2,4,6-toluene triisocyanate, 4,4'-dimethyl-2,2',5,5'-diphenylmethane tetraisocyanate, polymethylene-polyphenylene polyisocyanate, carbodiimide modified isocyanates, MDI prepolymers and mixtures of two or more of these. Polymeric MDI, a mixture of polyisocyanates with MDI as the main component, may also be used.

The isocyanate index of the polyisocyanate used may be in the range 100 to 140, preferably in the range 105 to 130, more preferably in the range 105 to 120.

The flexibility of a foam may be assessed according to DIN 53 423. The flexibility may be at least 10 mm, suitably at least 11 mm, preferably at least 12 mm, more preferably at least 13 mm, especially at least 14 mm.

The softening temperature of the foam may be at least 125 °C, preferably at least 130 °C, more preferably at least 135 °C.

The free rise density of the foam assessed according to ISO 845 may be at least 20, preferably at least 30, more preferably at least 40, especially at least 50 kg/m³. The free rise density may be 160 or less, preferably 120 or less, more preferably 100 or less, especially 80 kg/m³ or less.

The invention extends to a method of preparing a polyurethane foam which is semi-flexible and has a softening temperature of 120 °C or above, the method including reacting a polyisocyanate component with a said first polyol as described above and a said second polyol as described above.

The polyurethane foam suitably has a virtually closed-cell structure.

The invention further extends to a polyurethane foam which is semi-flexible and has a softening temperature of 120 °C or above prepared using a polyol formulation as described herein and/or in a method as described herein.

The invention extends to a shaped article comprising a polyurethane foam as described herein.

The shaped article is preferably a pipe. It preferably includes an inner pipe and a layer outside the inner pipe, which layer is preferably tubular and made of said polyurethane foam. Said layer outside suitably abuts said inner pipe. Said inner pipe may comprise a synthetic material such as cross-linked polyethylene. Preferably, however, it is made of metal, for example copper, steel or chrome-nickel.

Any feature of any aspect of any invention or embodiment described herein may be combined with any feature of any other aspect of any invention or embodiment described herein.

The invention will now be described, with reference to the following examples, wherein polyols I to V are examples of first polyols referred to above and polyols A to C are examples of second polyols. In the examples, the following are referred to:
Polyol I - a glycerol based PO-EO polyether polyol, 14% ethylene oxide (EO) tipped, having a hydroxyl value of 36 mg KOH/g and a molecular weight of 4700.
Polyol II - a glycerol based PO-EO polyether polyol, 18% EO tipped, having a hydroxyl value of 36 mg KOH/g and a molecular weight of 4700.
Polyol III - a glycerol based PO-EO polyether polyol, 15% EO randomly distributed, having a hydroxyl value of 40 mg KOH/g and a molecular weight of 4000.
Polyol IV - a glycerol based PO-EO polyether polyol, 13% EO randomly distributed and tipped, having a hydroxyl value of 56 mg KOH/g and a molecular weight of 3000.
Polyol V - a glycerol based PO-EO polyether polyol, 15% EO in-block, having a hydroxyl value of 56 mg KOH/g and a molecular weight of 3000.
Polyol VI - a glycerol based PO-EO polyether polyol, 75% EO random, having a hydroxyl value of 36 mg KOH/g and a molecular weight of 4700.
Polyol A - a diethanolamine/aromatic PO based polyether polyol with a hydroxyl value of 520 mg KOH/g, a functionality of 3.0 eq/mol an aromatic content of 16% and an amine content (expressed as a nitrogen content) of 3.6%.
Polyol B - an ethylenediamine/aliphatic PO based polyol, having a hydroxyl value of 650 mg KOH/g, a functionality of 4.0 eq/mol and an amine content (expressed as a nitrogen content) of 8%.
Polyol C - a DPP/EDA/Glycerol -PO polyol having a hydroxyl value of 500 mg KOH/g, a functionality of 3.0 eq/mol and an aromatic content of 30%.
Polyol D - a glycerol/sorbitol PO based polyether polyol having a hydroxyl value of 510 mg KOH/g and a number average functionality of 4.5 eq/mol.
Polyol E - a glycerol/sorbitol PO based polyether polyol with a hydroxyl value of 500 mg KOH/g and a number average functionality of 4.8 eq/mol.
Polyol F - a mixture of sorbitol and glycerol based polyether polyols with an average hydroxyl value of 350 mg KOH/g and an average functionality of 3.5 eq/mol.
Polyol G - a mixture of sorbitol and glycerol based polyether polyols with an average hydroxyl value of 450 mg KOH/g and an average functionality of 3.9 eg/mol.
pbw - refers to "parts by weight".
B8404 - refers to TEGOSTAB B8404 - a silicone surfactant (ex. Goldschmidt).
CARADATE 30 - polymeric MDI, equivalent weight 133.33 eq/g, number average functionality of 2.7 eq/mol and NCO content between 30 and 32% (ex Shell).
DIME 6 - N,N-dimethylcyclohexylamine catalyst (ex Shell).
D33LV - Dabco 33LV, 33% TEDA (triethylenediamine) in diethyleneglycol obtained from Air Products.

### Example 1

Polyol I (50 pbw) and Polyol A (50 pbw) were mixed together with additives as described in Table 1 at ambient temperature using a mechanical stirrer (at a speed sufficient to give a homogenous mixture) and were found to be miscible in all proportions, giving a clear single phase liquid.

Foams were then prepared in open polythene bags. The components described in Table 1 were conditioned at a temperature of 21 °C and all but the MDI were mixed in a plastic beaker at a speed of 3000 r.p.m. by means of a stirrer. The MDI was added in five seconds and the mixture was stirred for another five seconds before pouring it into the plastic bag. Reactivity times were measured and these are shown in Table 1.

A piece of foam taken from the centre of the bag was sampled and tested. Table 1 records results of tests undertaken. The flexibility was determined according to DIN53 423 in the rise direction as well as perpendicular to the foam rise. The value recorded is the displacement of the foam middle section at break. The results quoted are average measurements in the two directions. The softening temperature was determined using a TMA7 thermal analysis system from Perkin Elmer. Measurements were performed in a helium atmosphere; a force giving a 50 kPa load was applied; and a heating rate of 10 °C/minute was used. Other results provided in Table 1 were obtained using standard techniques.

### Examples 2 to 7

The polyols referred to in Table 1 were mixed and found to be miscible. The mixture was then reacted by a process analogous to that described in Example 1. Results are provided in Table 1.

### Comparative Examples C1 to C6

The polyols referred to in Table 2 were mixed but found to be immiscible. The mixtures were then reacted by a process analogous to that described in Example 1. Results are provided in Table 2. It will be appreciated that whilst the softening temperature of the foams of the Examples are sufficiently high, the immiscibility represents a problem. It is believed that the immiscibility may be due to the absence of any amine content in polyols D and E.

### Comparative Examples C7 to C9

The polyols referred to in Table 3 were mixed and found to be miscible. The mixtures were then reacted by a process analogous to that described in Example 1. Results are provided in Table 3. It should be appreciated that while the polyols are miscible, the foams produced either have sufficient flexibility but too low a softening temperature (Examples C7 and C8) or too low a flexibility but a satisfactory softening temperature.

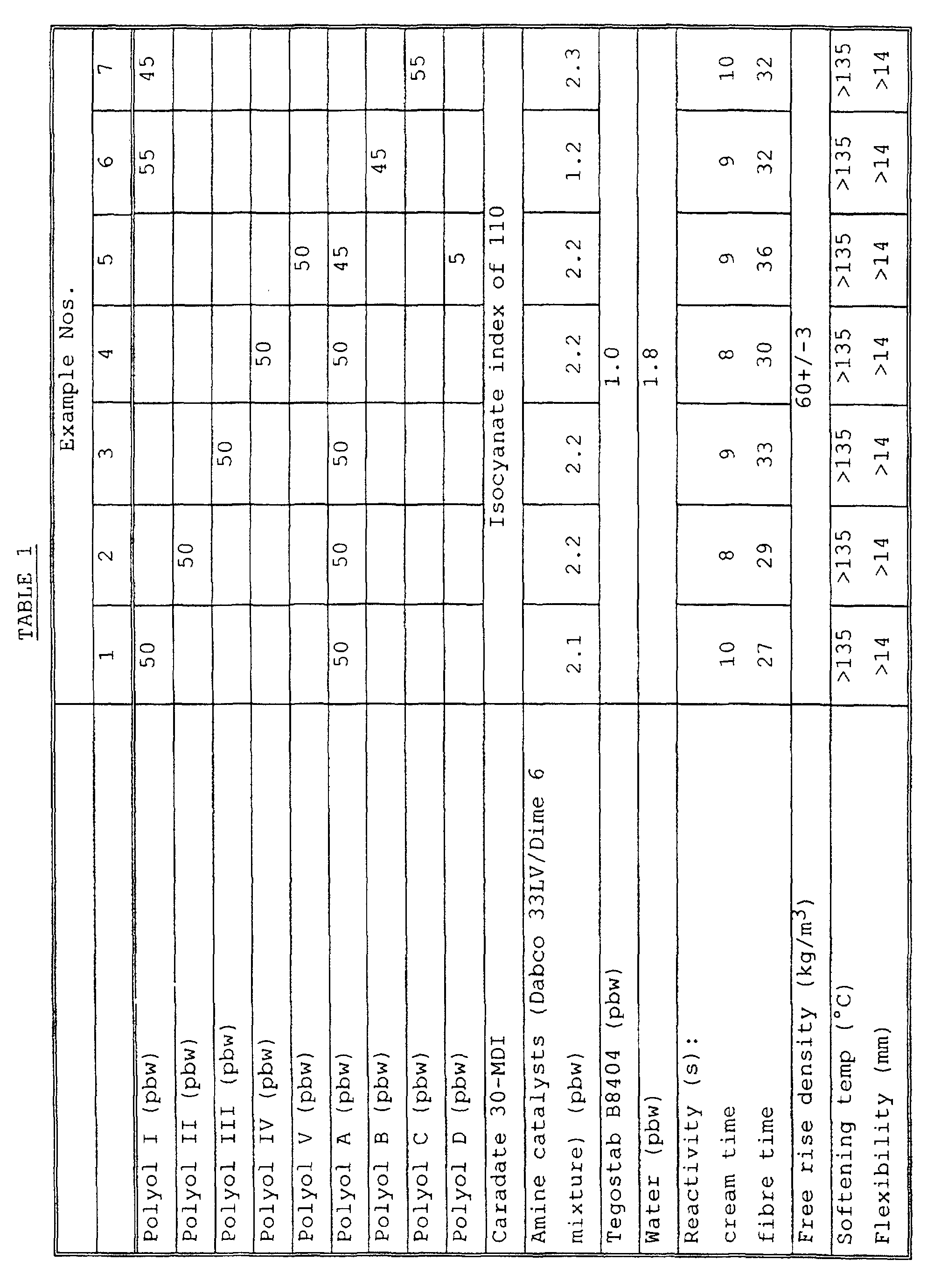

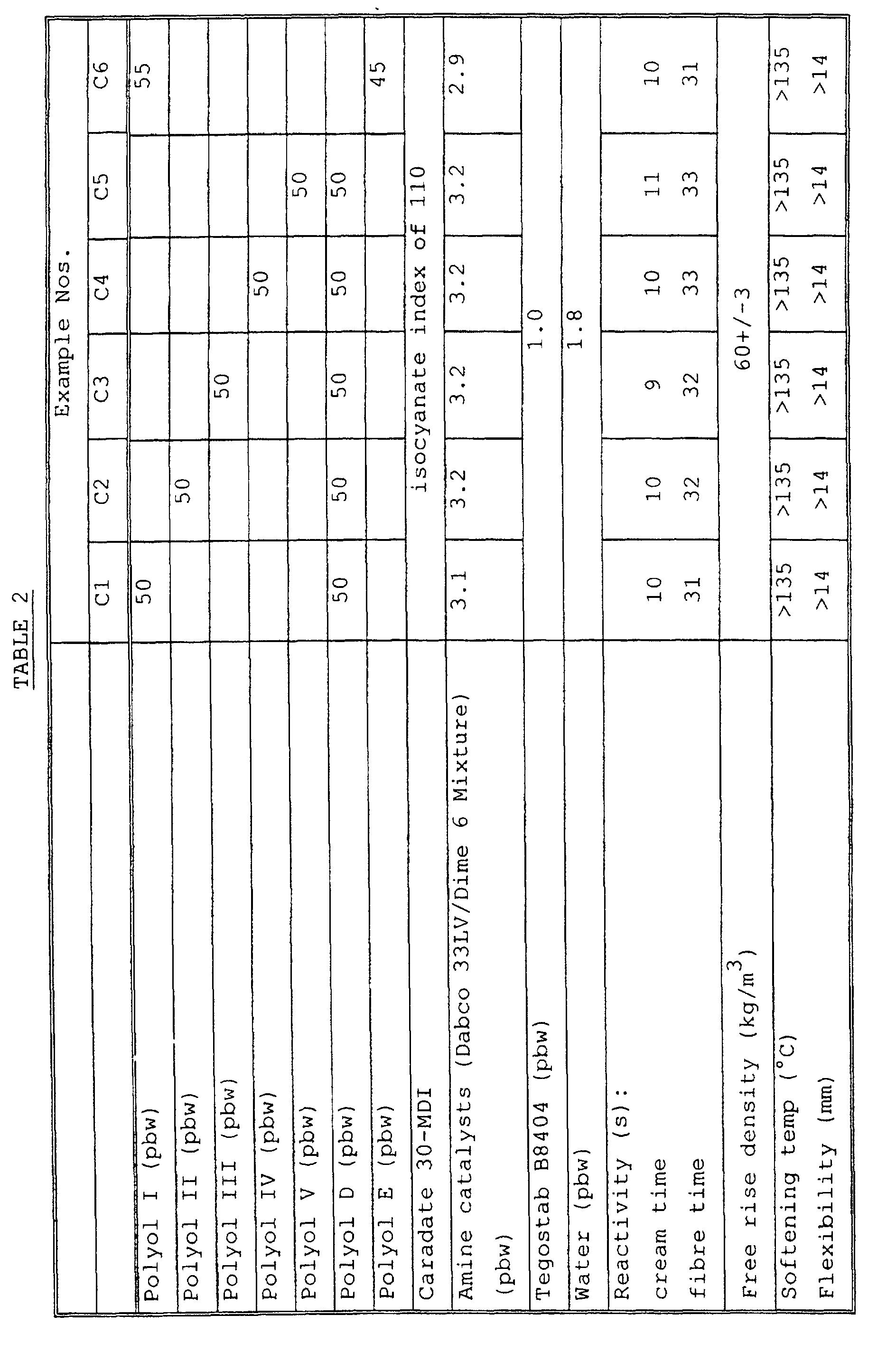

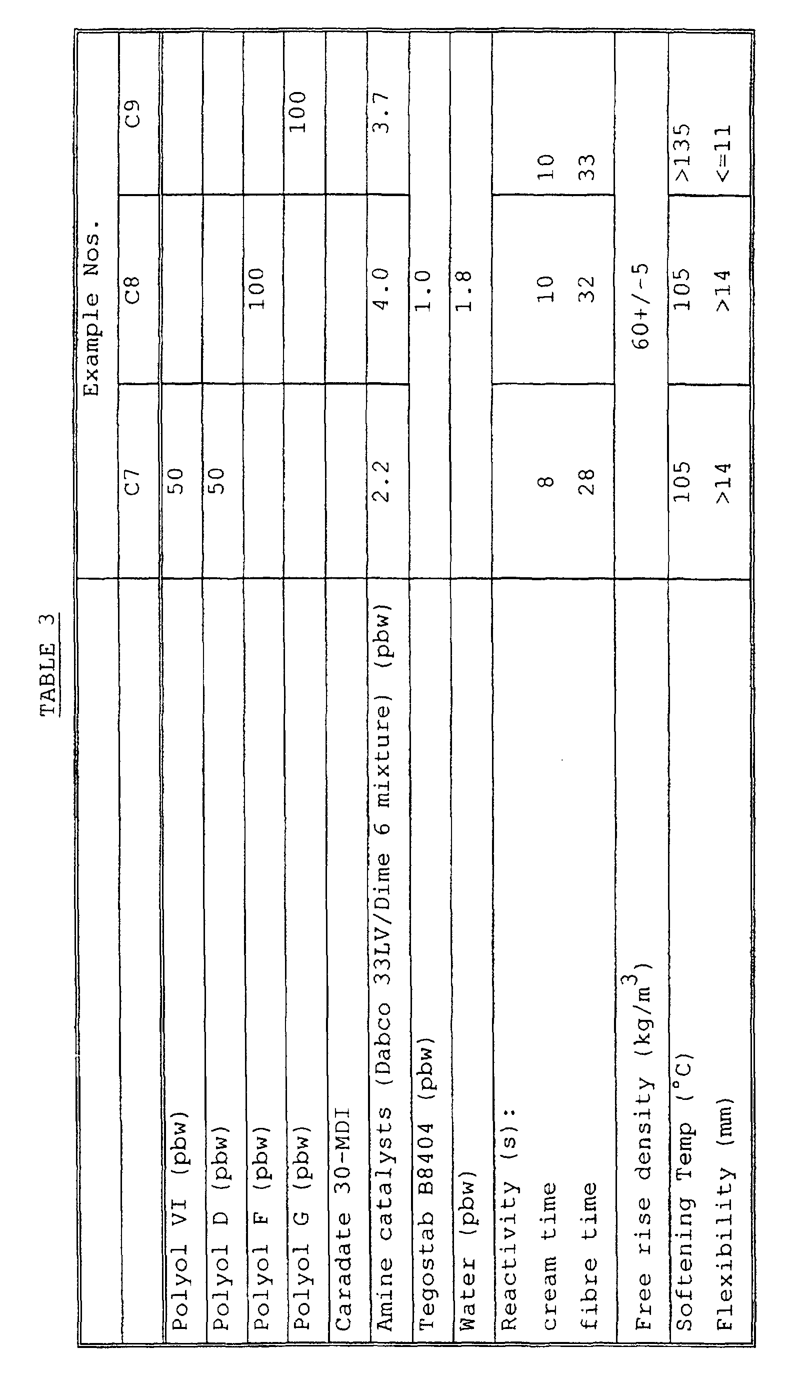

## Claims

1. A single-phase polyol mixture consisting essentially of 20 to 65 wt% of polyol of a first type (hereinafter "said first polyol") having a number average molecular weight of greater than 800, a hydroxyl value of less than 200 mg KOH/g and an ethylene oxide content of less than 75 wt% and, forming a miscible mixture therewith, 35 to 80 wt% of polyol of a second type (hereinafter "said second polyol") having a number average molecular weight of less than 1000, a hydroxyl value of greater than 300 mg KOH/g and an amine content (expressed in terms of the percentage of N) of at least 0.2 wt%.

2. A mixture according to claim 1, wherein said first polyol has a molecular weight of greater than 2500 and a hydroxyl value of less than 150 mg KOH/g and said second polyol has a molecular weight of less than 450.

3. A mixture according to claim 1 or claim 2, wherein said first polyol has a functionality of at least 2.2.

4. A mixture according to any preceding claim, wherein said first polyol has an ethylene oxide content of less than 40 wt%.

5. A mixture according to any preceding claim, comprising at least 40 wt% of said first polyol and at least 40 wt% of said second polyol.

6. A polyol formulation comprising
(a) a mixture as claimed in any one of claims 1-5,
(b) 0-8 php of one or more polyurethane catalysts,
(c) 0-10 php of a cross-linking agent,
(d) a blowing agent, and
(e) optionally usual auxiliaries.

7. A method of preparing a single-phase polyol mixture which comprises mixing together 20 to 65 wt% of polyol of a first type (hereinafter "said first polyol") having a number average molecular weight of greater than 800, a hydroxyl value of less than 200 mg KOH/g and an ethylene oxide content of less than 75 wt% and 35 to 80 wt% of polyol of a second type (hereinafter "said second polyol") having a number average molecular weight of less than 1000, a hydroxyl value of greater than 300 mg KOH/gand an amine content (expressed in terms of the percentage of N) of at least 0.2 wt%, said first polyol and said second polyol being mixed so that they form a miscible mixture.

8. A method of preparing a polyurethane foam which is semi-flexible and has a softening temperature of 120 °C or above, the method including reacting a polyisocyanate component with a polyol formulation as claimed in claim 6.

9. A polyurethane foam which is semi-flexible and has a softening temperature of 120 °C or above and which is prepared using a polyol formulation as claimed in claim 6 or in a method according to claim 8.

10. A shaped article comprising a polyurethane foam according to claim 9.

11. A shaped article according to claim 10, which article is a pipe.

## Patentansprüche

1. Einphasige Polyolmischung, die im wesentlichen aus 20 bis 65 Gew.-% eines Polyols eines ersten Typs (nachstehend wird darauf als "das erste Polyol" Bezug genommen) mit einem Zahlenmittel des Molekulargewichts von größer 800, einer Hydroxylzahl von kleiner 200 mg KOH/g und einem Ethylenoxidgehalt von kleiner 75 Gew.-%, und, eine mischbare Mischung damit bildend, 35 bis 80 Gew.-% eines Polyols eines zweiten Typs (nachstehend wird darauf als "das zweite Polyol" Bezug genommen) mit einem Zahlenmittel des Molekulargewichts von kleiner 1000, einer Hydroxylzahl von größer 300 mg KOH/g und einem Amingehalt (ausgedrückt in Form des Prozentsatzes des N) von mindestens 0,2 Gew.-% besteht.

2. Mischung nach Anspruch 1, wobei das erste Polyol ein Molekulargewicht von größer 2500 und eine Hydroxylzahl von kleiner 150 mg KOH/g und das zweite Polyol ein Molekulargewicht von kleiner 450 aufweist.

3. Mischung nach Anspruch 1 oder Anspruch 2, wobei das erste Polyol eine Funktionalität von mindestens 2,2 aufweist.

4. Mischung nach einem der vorstehenden Ansprüche, wobei das erste Polyol einen Ethylenoxidgehalt von kleiner 40 Gew.-% aufweist.

5. Mischung nach einem der vorstehenden Ansprüche, die mindestens 40 Gew.-% des ersten Polyols und mindestens 40 Gew.-% des zweiten Polyols umfaßt.

6. Polyolformulierung, die die nachstehenden Bestandteile umfaßt:
(a) eine Mischung nach einem der Ansprüche 1 bis 5,
(b) 0 bis 8 php von einem oder mehreren Polyurethankatalysatoren,
(c) 0 bis 10 php eines Vernetzungsmittels,
(d) ein Treibmittel, und
(e) wahlweise übliche Hilfsstoffe.

7. Verfahren zur Herstellung einer einphasigen Polyolmischung, das das Mischen von 20 bis 65 Gew.-% eines Polyols eines ersten Typs (nachstehend wird darauf als "das erste Polyol" Bezug genommen) mit einem Zahlenmittel des Molekulargewichts von größer 800, einer Hydroxylzahl von kleiner 200 mg KOH/g und einem Ethylenoxidgehalt von kleiner 75 Gew.-%, mit 35 bis 80 Gew.-% eines Polyols eines zweiten Typs (nachstehend wird darauf als "das zweite Polyol" Bezug genommen) mit einem Zahlenmittel des Molekulargewichts von kleiner 1000, einer Hydroxylzahl von größer 300 mg KOH/g und einem Amingehalt (ausgedrückt in Form des Prozentsatzes des N) von mindestens 0,2 Gew.-% umfaßt, wobei das erste Polyol und das zweite Polyol so gemischt werden, daß sie eine mischbare Mischung bilden.

8. Verfahren zur Herstellung eines Polyurethanschaumstoffs, der halbflexibel ist und eine Erweichungstemperatur von 120 °C oder höher aufweist, wobei das Verfahren das Umsetzen eines Polyisocyanatbestandteils mit einer Polyolformulierung nach Anspruch 6 umfaßt.

9. Polyurethanschaumstoff, der halbflexibel ist und eine Erweichungstemperatur von 120 °C oder höher aufweist und der unter Verwendung einer Polyolformulierung nach Anspruch 6 oder in einem Verfahren nach Anspruch 8 hergestellt wurde.

10. Formartikel, der einen Polyurethanschaumstoff nach Anspruch 9 umfaßt.

11. Formartikel nach Anspruch 10, bei dem es sich um eine Röhre handelt.

## Revendications

1. Mélange monophasique de polyols consistant essentiellement en une quantité de 20 à 65 % en poids d'un polyol d'un premier type (appelé ci-après "ledit premier polyol") ayant une moyenne en nombre du poids moléculaire supérieure à 800, un indice d'hydroxyle inférieur à 200 mg de KOH/g et une teneur en oxyde d'éthylène inférieure à 75 % en poids et, formant un mélange miscible avec ce polyol, une quantité de 35 à 80 % en poids d'un polyol d'un second type (appelé ci-après "ledit second polyol") ayant une moyenne en nombre du poids moléculaire inférieure à 1000, un indice d'hydroxyle supérieur à 300 mg de KOH/g et une teneur en amine (exprimée en termes de pourcentage de N) d'au moins 0,2 % en poids.

2. Mélange suivant la revendication 1, dans lequel ledit premier polyol a un poids moléculaire supérieur à 2500 et un indice d'hydroxyle inférieur à 150 mg de KOH/g et ledit second polyol a un poids moléculaire inférieur à 450.

3. Mélange suivant la revendication 1 ou la revendication 2, dans lequel ledit premier polyol a une fonctionnalité d'au moins 2,2.

4. Mélange suivant l'une quelconque des revendications précédentes, dans lequel ledit premier polyol a une teneur en oxyde d'éthylène inférieure à 40 % en poids.

5. Mélange suivant l'une quelconque des revendications précédentes, comprenant au moins 40 % en poids dudit premier polyol et au moins 40 % en poids dudit second polyol.

6. Formulation de polyols comprenant
(a) un mélange suivant l'une quelconque des revendications 1 à 5,
(b) 0 à 8 pcp d'un ou plusieurs catalyseurs de polyuréthanne,
(c) 0 à 10 pcp d'un agent de réticulation,
(d) un agent porogène, et
(e) facultativement, des auxiliaires usuels.

7. Procédé pour la préparation d'un mélange monophasique de polyols, qui comprend l'étape consistant à mélanger ensemble une quantité de 20 à 65 % en poids d'un polyol d'un premier type (appelé ci-après "ledit premier polyol") ayant une moyenne en nombre du poids moléculaire supérieure à 800, un indice d'hydroxyle inférieur à 200 mg de KOH/g et une teneur en oxyde d'éthylène inférieure à 75 % en poids et une quantité de 35 à 80 % en poids d'un polyol d'un second type (appelé ci-après "ledit second polyol") ayant une moyenne en nombre du poids moléculaire inférieure à 1000, un indice d'hydroxyle supérieur à 300 mg de KOH/g et une teneur en amine (exprimée en termes de pourcentage de N) d'au moins 0,2 % en poids, ledit premier polyol et ledit second polyol étant mélangés de telle sorte qu'ils forment un mélange miscible.

8. Procédé pour la préparation d'une mousse de polyuréthanne qui est semi-flexible et qui a une température de ramollissement égale ou supérieure à 120°C, procédé qui comprend la réaction d'un constituant polyisocyanate avec une formulation de polyols suivant la revendication 6.

9. Mousse de polyuréthanne qui est semi-flexible et qui a une température de ramollissement égale ou supérieure à 120°C et qui est préparée en utilisant une formulation de polyols suivant la revendication 6 ou dans un procédé suivant la revendication 8.

10. Article façonné comprenant une mousse de polyuréthanne suivant la revendication 9.

11. Article façonné suivant la revendication 10, ledit article étant un conduit.
